# EUROPEAN PATENT SPECIFICATION

(11) **EP 4 129 782 B1**
(45) Date of publication and mention of the grant of the patent: **06.05.2026**
(21) Application number: 21776469.5
(22) Date of filing: 25.03.2021
(51) Int. Cl.: B60T 13/14, B60T 8/40, B60T 7/04

(54) **ELECTRONIC BRAKE SYSTEM**
ELEKTRONISCHES BREMSSYSTEM
SYSTÈME DE FREIN ÉLECTRONIQUE

(30) Priority: 25.03.2020 KR 20200036404
(43) Date of publication of application: 08.02.2023
(73) Proprietor: HL Mando Corporation, Pyeongtaek-si, Gyeonggi-do (KR)
(72) Inventor: KIM, Jinseok, Suwon-si Gyeonggi-do 16516 (KR)
(74) Representative: Pfenning, Meinig & Partner mbB
(86) International application number: PCT/KR2021/003740
(87) International publication number: WO 2021/194289

(56) References cited:
- WO-A1-2016/096465
- WO-A1-2016/096465
- WO-A1-2018/219649
- CN-A- 104 176 023
- CN-A- 104 203 675
- JP-A- 2014 069 698
- KR-A- 20190 136 210
- KR-A- 20190 136 210
- US-A1- 2013 232 965
- US-A1- 2019 092 295
- US-A1- 2019 100 189

## Description

### Technical Field

The present invention relates to an electronic brake system and, more particularly, to an electric brake system for generating a braking force using an electrical signal corresponding to a displacement of a brake pedal.

### Background Art

Vehicles are essentially equipped with brake systems for carrying out braking, and various types of brake systems have been proposed for the safety of drivers and passengers.

Conventional brake systems have mainly used a way of supplying the wheel cylinder with the hydraulic pressure required for braking by means of a mechanically connected booster when a driver works a brake pedal. However, as the market demand for implementing various braking functions in close correspondence with the operating environment of a vehicle has increased, in recent years, an electronic brake system has been widely used in which a driver's braking intention is transmitted as an electrical signal from a pedal displacement sensor that senses the displacement of a brake pedal when the driver works the brake pedal, and based on this, a hydraulic pressure supply device is operated to supply the hydraulic pressure required for braking to a wheel cylinder.

Such an electronic brake system generates and provides an electrical signal to a driver's brake pedal actuation in normal operating mode or to a vehicle's autonomous braking stage, on the basis of this, the hydraulic pressure supply is electrically actuated and controlled to generate and transmit the required hydraulic pressure to the wheel cylinder. In this way, the electronic brake system and the operating method are electrically operated and controlled, so that various braking actions may be
realized in a complex manner, but in the event of a technical problem with the electrical component, the hydraulic pressure required for braking is not reliably built up, which may pose a threat to passenger safety.

The electronic brake system thus enters an abnormal operating mode when a component is defective or corresponds to an uncontrollable state, wherein a mechanism is required in which a driver's brake pedal actuation must be directly linked to a wheel cylinder. Thus, in an abnormal operating mode of the electronic brake system, it is necessary for a driver to exert a braking force on a brake pedal, so that the hydraulic pressure required for braking is immediately built up and may be transferred directly into a wheel cylinder. Furthermore, there is a need for an accurate and quick test of the failure of the electronic brake system in order to quickly enter an abnormal operating mode in case of an emergency and to ensure the safety of a passenger.

Meanwhile, there is a problem in mounting the electronic brake system on a vehicle that the design freedom of the vehicle is limited by the size and installation position limits of the system module. Accordingly, there is a need for an efficient system module installation while maintaining the braking performance of a vehicle.

Further, recently, an autonomous driving system which recognizes ambient information from a camera, a radar, a sensor, or the like mounted on a vehicle, and in which based on this, the vehicle autonomously travels and stops without driver intervention has been developed. During autonomous driving of a vehicle, automatic performance is ensured on the basis of the sensed information independently of a driver's brake pedal operation, which not only hinders the comfort of occupancy of an operator when a brake pedal remains exposed to the vehicle's passenger space, but there is also a concern that a driver's leg is injured by an exposed brake pedal in a bump during autonomous driving.

KR 2019 0136210 A describes electronic brake system comprises: a hydraulic pressure generator including a master cylinder to which a master cylinder reservoir is coupled to generate hydraulic pressure; a hydraulic block provided with a hydraulic pressure supply device to generate the hydraulic pressure by an electrical signal output in response to displacement of a brake pedal and a hydraulic control unit to transmit the hydraulic pressure discharged from the hydraulic pressure supply device to wheel cylinders provided in each wheel, and disposed to be separated from the hydraulic pressure generator; a hydraulic block reservoir coupled to the hydraulic block; and a connection hose to connect the master cylinder reservoir and the hydraulic block reservoir.

According to WO 2016/096465 A1, an electromechanical brake booster for a motor vehicle brake system comprises an electric drive motor for generating a boosting force, a gearing device which is coupled in so as to act between the electric drive motor and a piston rod or a piston of a master brake cylinder and which serves for converting a drive movement of the electric drive motor into a translational movement of the piston rod or of the piston with variable transmission ratio, and a thrust rod for coupling to a brake pedal. The thrust rod is coupled in torque-transmitting fashion to an input side, coupled to the electric drive motor, of the gearing device. US 2019/100189 A1 concerns a brake system that includes first and second wheel brakes, a reservoir, and a brake pedal unit having a housing and a pair of output pistons slidably disposed in the housing. The output pistons generate brake actuating pressure during a manual push-through mode for actuating the first and second wheel brakes. The system further includes a plunger assembly having a housing having a motor driving an actuator, and a piston connected to the actuator. The piston pressurizes a chamber when the piston is moving in a first direction to provide fluid flow out of a first port and through a pair of parallel valves. The piston pressurizes a second chamber when the piston is moving in a second direction opposite the first direction to provide fluid flow out of a second port. The first and second ports are selectively in fluid communication with the wheel brakes.

### Detailed Description of the Invention

### Technical Problem

The present embodiment is to provide an electronic brake system capable of effectively implementing braking even in various operating situations.

The present embodiment is to provide an electronic brake system capable of adjusting the position of a brake pedal according to the operating situation of a vehicle.

The present embodiment is to provide an electronic brake system capable of receiving a brake pedal during autonomous driving of a vehicle to improve a driver's comfort.

The present embodiment is to provide an electronic brake system with improved performance and operational reliability.

The present embodiment is to provide an electronic brake system that may improve the design freedom of a vehicle.

The present embodiment is to provide an electronic brake system that may easily and efficiently perform installation and deployment of a vehicle.

### Technical Solution

According to an aspect of the present invention, there is provided an electronic brake system including: a first block in which an operating part operated in conjunction with a brake pedal is arranged; a second block in which an electronic part that is electronically operated and controlled by an electronic control unit is arranged, and which is arranged spaced apart from the first block; and a connecting line for hydraulically connecting the first block and the second block to each other, wherein: the operating part includes a master cylinder having a master piston connected to the brake pedal and a master chamber whose volume is variable by displacement of the master piston, and a pedal folding device provided between the master piston and the brake pedal; the electronic part includes a hydraulic control unit including a pedal simulator, a hydraulic pressure supply device for generating hydraulic pressure by actuating a hydraulic piston by an electric signal, a first hydraulic circuit for controlling hydraulic pressure transmitted to two wheel cylinders, and a second hydraulic circuit for controlling the hydraulic pressure to be transmitted to other two wheel cylinders; and the connecting line includes a first connecting line having a first branch line connected at one end to the master chamber and at the other end to be branched and connected to the first hydraulic circuit, a second branch line connected to the second hydraulic circuit and a third branch line to be connected to the pedal simulator.

The pedal folding device may include: an actuator for generating and providing power; and a gear part disposed between the actuator and an input rod to convert a rotational force of the actuator into a linear motion of the input rod.

The operating part may further include a main reservoir in which a pressurizing medium is stored, the electronic part further includes a sub-reservoir in which a pressurizing medium is stored, and the connecting line may further include a second connecting line having one end connected to the main reservoir, and the other end connected to the sub-reservoir.

The first connecting line may further include a fourth branch line that has the other end which branches off and is connected to the sub-reservoir

The electronic part may further include: a first cut valve provided in the first branch line to control a flow of a pressurizing medium; and a second cut valve provided in the second branch line to control a flow of a pressurizing medium.

The electronic part may further include a simulator valve provided in the third branch line to control a flow of a pressurizing medium.

The electronic part may further include a folding dump valve provided in the fourth branch line to control a flow of a pressurizing medium.

The electronic part may further include a first sub-reservoir flow path connecting the sub-reservoir and a rear end of the first hydraulic circuit, and a second sub-reservoir flow path connecting the sub-reservoir and a rear end of the second hydraulic circuit.

The fourth branch line may be joined to the second sub-reservoir flow path and connected to the sub-reservoir.

The electronic part may further include a simulator discharge flow path connected to a rear end of the pedal simulator, and the simulator discharge flow path may join the second sub-reservoir flow path and may be connected to the sub-reservoir.

The hydraulic pressure supply device may include a first pressure chamber provided in front of a hydraulic piston and a second pressure chamber provided in rear of the hydraulic piston.

The electronic part may further include a dump control part provided between the sub-reservoir and the hydraulic pressure supply device to control a flow of a pressurizing medium, and the dump control part includes a first dump control part for controlling a flow of a pressurizing medium between the first pressure chamber and the sub-reservoir, and a second dump control part for controlling a flow of a pressurizing medium between the second pressure chamber and the sub-reservoir.

The electronic part may further include a third sub-reservoir flow path connecting the sub-reservoir and the first dump control part, and a fourth sub-reservoir flow path connecting the sub-reservoir and the second dump control part.

The first hydraulic circuit may include a first inlet valve and a second inlet valve that control a flow of a pressurizing medium supplied from the hydraulic pressure supply device to the first wheel cylinder and the second wheel cylinder, respectively, and a first outlet valve and second outlet valve that respectively control a flow of a pressurizing medium discharged from the first and second wheel cylinders, the second hydraulic circuit may include a third inlet valve and a fourth inlet valve for controlling a flow of a pressurizing medium supplied from the hydraulic pressure supply device to the third wheel cylinder and the fourth wheel cylinder, respectively, and a third outlet valve and a fourth outlet valve for respectively controlling a flow of a pressurizing medium discharged from the third and fourth wheel cylinders, the pressurizing medium discharged via the first and second outlet valves may be supplied to the first sub-reservoir flow path, and the pressurizing medium discharged via the third and fourth outlet valves may be supplied to the second sub-reservoir flow path.

The first connecting line may be provided as a rigid pipe, and the second connecting line may be provided as an elastic hose.

### Advantageous Effects

An electronic brake system according to the present embodiment may stably and effectively implement braking in various operation situations of a vehicle.

An electronic brake system according to the present embodiment may effectively adjust the position of a brake pedal depending on the operation condition of a vehicle.

An electronic brake system according to the present embodiment may receive a brake pedal during autonomous driving of a vehicle to improve the comfort of a driver.

An electronic brake system according to the present embodiment may improve the design freedom of a vehicle.

An electronic brake system according to the present embodiment may easily and efficiently perform installation and placement of a vehicle.

An electronic brake system according to the present embodiment may improve the performance and operational reliability of the product.

### Brief Description of the Drawings

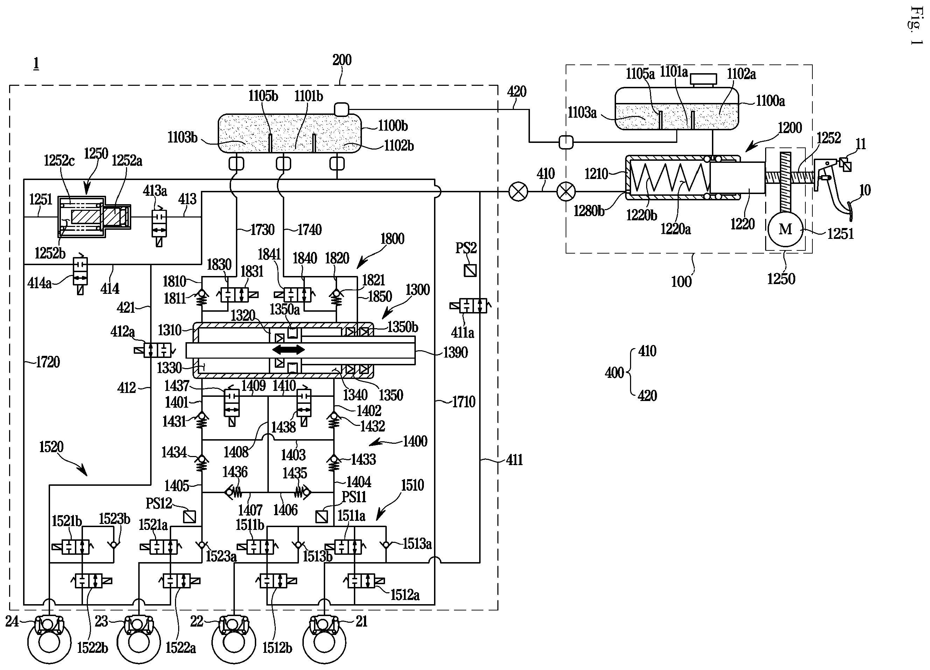

FIG. 1 is a hydraulic circuit diagram showing an electronic brake system according to an embodiment.

### Mode for Carrying Out the Invention

Hereinafter, the present embodiments will be described in detail with reference to the accompanying drawings. The following embodiments are presented to fully convey the scope of the invention to those skilled in the art. The present invention is not limited to the embodiments presented herein but may be embodied in other forms. The drawings may omit illustration of parts unrelated to the description for clarity of the invention, and may somewhat exaggerate the size of the components for ease of understanding.

FIG. 1 is a hydraulic circuit diagram showing an electronic brake system 1 according to an embodiment.

With reference to FIG. 1, an electronic brake system 1 according to the present embodiment may be provided including a first block 100 in which an operation portion that operates in conjunction with a brake pedal is disposed, a second block 200, in which electronic portions that are operated and controlled in an electronic manner are disposed, and a plurality of connecting lines 400 that hydraulically connect the first and second blocks to each other.

The first block 100 is arranged with an operating part in connection with and in conjunction with the brake pedal 10, and the second block 200 with an electronically operated and controlled electronics such as valves and sensors controlled in operation by an electronic control unit (not shown).The first block 100 and the second block 200 are arranged at a distance from each other on the vehicle and may be hydraulically connected by a plurality of connecting lines 400, whereby the vehicle mountability of the electronic brake system 1 is improved, and further, the design freedom of the vehicle may be achieved to enable efficient spatial arrangement.

The operating part includes component elements which, independently of the control signal of the electronic control unit, operate in conjunction with the brake pedal 10 or operate by a separate operation, and may be arranged in the first block 110.

The operating part may include a main reservoir 1100a in which a pressurizing medium such as brake oil is stored, a master cylinder 1200 for pressurizing and discharging the pressurizing medium, such as brake oil, housed inside in accordance with a pedal force of the brake pedal 10, and main reservoir flow path 1110 connecting the main reservoir 1100a and the master cylinder 1200.

The master cylinder 1200 is configured to include a hydraulic chamber, and may pressurize and discharge an inner pressurizing medium. The master cylinder 1200 may include a master chamber 1220a and a master piston 1420 provided in the master chamber 1220a. The master chamber 1220a may be formed on the inlet side of the cylinder block 1310 to which the brake pedal 10 is connected, and the master piston 1420 may be reciprocally accommodated in the master chamber 1220a.

The master chamber 1220a is capable of introducing and discharging pressurizing medium through the first hydraulic port and the second hydraulic port. The first hydraulic port 1280a is connected to a main reservoir flow path 1110, which will be described later, and pressurizing medium flows from the main reservoir 1100a into the master chamber 1220a, and a pair of sealing members are provided at the front (left side with reference to FIG. 1) and the rear (right side with reference to FIG. 1) of the first hydraulic ports 140a so as to seal the master chamber 1220a.The second hydraulic port 1280b is connected to a first connecting line 410, which will be described later, so that the pressurizing medium in the master chamber 1220a may be discharged to the first connecting line 410, or conversely, the pressurizing media may be introduced from the first connecting line 410 into the master chambers 1220a.

The master piston 1220 is provided to be accommodated in the master chamber 1120a, and a negative pressure may be formed in the interior of the master chamber 1220a by pressurizing the pressurizing medium accommodated in a master chamber 1220a by advancing or by reversing. Specifically, when the master piston 1220 is advanced, as the volume of the master chamber 1220a decreases, the pressurizing medium present in the interior of the master chamber 1220a may be pressurized to form a hydraulic pressure. In contrast, as the volume of the master chamber 1220a increases when the master piston 1120 moves back, the pressurizing medium present in the interior of master chamber 1220a is able to be depressurized and, at the same time, to create a negative pressure in the master chamber 1220a.

A piston spring 1220b is provided to resiliently support the master piston 1120.To this end, the piston spring 1220b may be arranged between the front face (left end with reference to FIG. 1) of the master piston 1320 and the inner side of the cylinder block 1410.When a displacement occurs in the master piston 1220 in response to an operation such as braking, the piston springs 1120b are each compressed, and when a subsequent release is made to the operation of braking or the like, the master pistons 1320 may return to their original positions while the piston springs 1020b expand by an elastic force.

The main reservoir 1100a may house and store the pressurizing medium inside. The main reservoir 1100a may be connected to the master cylinder 1200 and a component such as a second connecting line 420 described below to supply or receive pressurizing medium.

The main reservoir 1100a may be provided divided into a plurality of chambers by a partition wall 1105a. The main reservoir 1100a includes a plurality of main reservoir chambers 1101a, 1102a, and 1103a, wherein the plurality of the main reservoir chamber 1101a, 1102a and 1103a may be arranged side by side in a row. Specifically, the main reservoir 1100a may be divided into a first main reservoir chamber 1101a disposed in the central portion, a second main reservoir chamber 1102a disposed at one side, and a third main reservoir chamber 1103a disposed at the other side.

The partition wall 1105a may be provided between adjacent main reservoir chambers, respectively, and each partition wall 1105a may be provided with at least a portion of the top open. As a result, the adjacent main reservoir chambers 1101a, 1102a, and 1103a communicate with each other so that the pressurizing medium may move. As an example, when a large amount of pressurizing medium is introduced into the first main reservoir chamber 1101a, the pressurizing medium may pass through the upper end of the partition wall 1105a to the second or third main reservoir chamber 1102a or 1103a.

The first main reservoir chamber 1101a may be connected with a second connecting line 420, which will be described later, to supply pressurizing medium to the sub-reservoir 1200b or may be supplied with pressurizing medium from the sub-reservoir 1302b, and the second main reservoir chambers 1402a are connected with the main reservoir flow path 1510 to supply or receive pressurizing medium toward the master cylinder 1200.

As described above, since the main reservoir 1100a is divided and provided in the first to third main reservoir chambers 1101a, 1102a, 1103a, stable operation of the electronic brake system 1 may be achieved. In one example, when the main reservoir 1100a is formed in one chamber and the amount of the pressurizing medium to be accommodated is not sufficient, the pressurizing medium cannot be stably supplied to the master cylinder 1200 side as well as to the sub-reservoir 1100b. Therefore, by separately providing the first main reservoir chamber 1101a connected to the sub-reservoir 1200b of the electronic part of the main reservoir 1100a and the second main reservoir chamber 1102a connected with the side of the master cylinder 1200 , it is possible to implement braking of the vehicle by supplying the pressurizing medium to the other component elements even in the case where it is not supplied to one component element.

The main reservoir flow path 1110 is provided to hydraulically connect the master cylinder 1200 and the main reservoir 1100a. The main reservoir flow path 1110 connects the master chamber 1220a and the second main reservoir chamber 1102a of the main reservoir 1100a. To this end, one end of the main reservoir flow path 1110 may be in communication with the master chamber 1220a of the master cylinder 1200, and the other end may be connected with the second main reservoir chamber 1102a of a main reservoir 1100a.

The pedal folding device 1250 may move the brake pedal 10 so that the accommodation comfort of the driver and the operability of the vehicle may be improved in accordance with the operation condition of a vehicle. In particular, braking of the vehicle is automatically carried out during autonomous driving of the motor vehicle, without the driver having to operate the brake pedal 10.Thus, the electronic brake system 1 according to the present embodiment is capable of advancing the brake pedal 10 by the pedal folding device 1250 so as to accommodate it from the passenger space of the vehicle in order to provide the driver with comfortable accommodation. On the contrary, the brake pedal 10 may be moved back to expose it to the passenger space of the vehicle on which the driver has boarded, so that the driver may easily operate it when driving and braking the vehicle by the driver. In addition, the position at which the operation of the brake pedal 10 is facilitated may vary according to the physical specifications of the driver, and the pedal folding device 1250 is able to adjust it to a suitable position, since the driver may require living comfort even when the vehicle is stopped.

A pedal folding device 1250 is arranged in the first block 100 of the instrument part and may be provided between the master piston 1120 and the input rod of the brake pedal 14. The pedal folding device 1250 may include an actuator 1351 that generates and provides power for movement of the brake pedal 10 or input rod, and a gear portion 1452 that converts the rotational power of the actuator 251 into linear motion of the input rod. The actuator 1251 may include a drive motor or the like that receives power from a battery (not shown) of the vehicle to generate power, and the gear unit 1152 may receive the rotational force of the drive motor to generate forward and backward movement of the input rod and the brake pedal 110. The gear portion 1252 may be provided in various gear structures for converting rotational motion into linear motion, and may include, but is not limited to, a first thread formed on an outer peripheral surface of the input rod and a second thread formed at a drive shaft of the drive motor and engaging the first thread.

When the brake pedal 10 is received by the pedal folding device 1250, the master piston 1120, which is connected to it, is also advanced with the advancement of the brake pedal. At this time, the hydraulic pressure of the pressurizing medium accommodated in the master chamber 1220a may be increased by the advance of the master piston 1120. When the hydraulic pressure of the pressurizing medium is transmitted to the hydraulic circuit or wheel cylinder side described later, a malfunction of braking may occur, and therefore, it is necessary to discharge the hydraulic pressure of a pressurizing medium generated by operation of the pedal folding device 1250. Accordingly, the pressurizing medium having a hydraulic pressure formed by the operation of the pedal folding device 1250 may be discharged to the sub-reservoir 1100b through the first connecting line 410 and the fourth branch line 314, which will be described later in detail.

The electronic component includes components that are electronically operated and controlled by a control signal of an electronic control unit (ECU, not shown) and may be arranged in the second block 200.

The electronic part may include an electronic control unit, a sub-reservoir 1100b for auxiliaryly storing pressurizing medium inside, a pedal simulator 1250 for providing a reaction force against a driver's brake pedal 10, a folding dump valve 414a for discharging the hydraulic pressure of the pressurizing medium formed in the master chamber 1220a according to the operation of the pedal folding device 1250, a hydraulic pressure supply device 1300 that receives the driver's braking intention as an electrical signal by a pedal displacement sensor 11 that detects the displacement of the brake pedal 10 and generates hydraulic pressure of the pressurizing medium through a mechanical operation, a hydraulic control unit 1400 for controlling the hydraulic pressure provided from the hydraulic pressure supply device 1300 and the hydraulic pressure transferred to first to fourth wheel cylinders 21 , 22 , 23, 24, a dump control unit 1800 that hydraulically connects the sub-reservoir 1100b and the hydraulic pressure supply device 1300 and controls the flow of the pressurizing medium therebetween, a plurality of sub-reservoir flow paths 1710, 1720, 1730, 1740 connecting the sub-reservoir 1100b to the first and second hydraulic circuits 1510, 1520 and the dump control unit 1800 side, a plurality of cut valves 411, 412a provided in the connection line to control the flow of the pressurizing medium, a test valve 1900 for testing the leak of the master cylinder 1200, a circuit pressure sensor (PS1) for detecting the hydraulic pressure of the pressurizing medium provided by the hydraulic pressure supply device 1300, and a cylinder pressure sensor (PS2) for detecting the hydraulic pressure of the master chamber 1220a.

The sub-reservoir 1100b may be disposed in the second block 200 to secondarily store pressurizing medium. The auxiliary storage of the pressurizing medium in the electronic part by the sub-reservoir 1100b enables smooth supply and delivery of pressurizing medium even in electronic parts such as the hydraulic pressure supply device 1300, the dump control part 1800 and the first and second hydraulic circuits 1510, 1520.

The sub-reservoir 1100b may be connected to the main reservoir 1100a of the operating part 1010a by a second connecting line 420 described later. In addition, the sub-reservoir 1100b may be connected to the first hydraulic circuit 1510 and the second hydraulic circuit 1520, respectively, by the first sub-reservoir flow path 1710 and the second sub-reservoir flow path 1720, and may be coupled to the dump control part 1800 by the third sub-reservoir flow path 1730 and the fourth sub-reservoir flow path 1740.

The hydraulic pressure supply device 1300 is arranged to receive an electrical signal from a pedal displacement sensor which senses the displacement of the brake pedal 10 and to generate the hydraulic pressure of the pressurizing medium through mechanical actuation.

The hydraulic pressure supply device 1300 may include a hydraulic pressure supply part for supplying a pressure medium pressure to be transmitted to the wheel cylinder 20, a motor (not shown) for generating a rotational force by an electric signal of a pedal displacement sensor, and a power conversion part (not shown) for converting a rotational movement of the motor into a linear movement and transmitting the linear movement to the hydraulic pressure supply part.

The hydraulic pressure provision part includes a cylinder block 1310 in which a pressurizing medium is provided so as to be able to be accommodated, a hydraulic piston 1320 accommodated in the cylinder block, a sealing member 1250 provided between the hydraulic piston 1220 and the cylinder blocks 1130 to seal the pressure chambers 1430, 1440, and a drive shaft 1590 for transmitting the power output from the power conversion part to the hydraulic pistons 1220.

The pressure chambers 1330, 1240 may include a first pressure chamber 1130 located in front of the hydraulic piston 1320 (leftward of the hydraulic piston 1320 with reference to FIG. 1) and a second pressure chamber 1340 located in rear of the hydraulic piston 1320 (rightward of the hydraulic piston 1320 with reference to FIG 1). That is, the first pressure chamber 1330 is defined by the front surface of the cylinder block 1210 and the hydraulic piston 1420 so as to vary in volume according to the movement of the hydraulic pistons 1520, and the second pressure chambers 1340 are defined by a rear surface of each of the cylinders 1710, 1820.

The first pressure chamber 1330 is connected to a first hydraulic flow path 1401, which will be described later, via a first communication hole formed in the cylinder block 1310, and the second pressure chamber 1340 is coupled to a second hydraulic flow path 1402, which is described later.

The sealing member includes a piston sealing member 1350a provided between the hydraulic piston 1220 and the cylinder block 1410 to seal between the first pressure chamber 1330 , and the second pressure chamber 1340, and a drive-shaft sealing member 1450b provided between a drive shaft 1690 of the cylinder 1710, to seal an opening of the second and cylinder blocks 1840.The hydraulic pressure or the negative pressure in the first pressure chamber 1330 and the second pressure chamber 1340 caused by the forward or backward movement of the hydraulic piston 1220 is sealed by the piston sealing member 1150a and the drive shaft sealing member 1250b so as not to leak, and may be transmitted to the first hydraulic flow path 1401 and to the second hydraulic flow path 1402 described later. In addition, a chamber sealing member 1350c may be provided between the second pressure chamber 1340 and the drive shaft sealing member 1450b, and the chamber sealing members 155c may allow the flow of the pressurizing medium flowing into the first pressure chamber 1440 through the auxiliary inflow path 1850, which will be described later, but may block the flow of the pressurizing medium leaking out of the second pressure chamber 1340 into the auxiliary outflow path 2550.

A motor (not shown) is provided to generate the driving force of the hydraulic piston 1320 by an electrical signal output from the electronic control unit (ECU). The motor may include a stator and a rotor, thereby supplying power for generating displacement of the hydraulic piston 1320 by rotating in a forward or reverse direction. The rotational angular velocity and the rotational angle of the motor may be precisely controlled by a motor control sensor. Since the motor is a well-known technique, a detailed description thereof will be omitted.

A power conversion part (not shown) is provided to convert the rotational force of the motor into linear motion. As an example, the power converter may be provided with a structure including a worm shaft (not shown), a worm wheel (not shown), and a drive shaft 1390.

The worm shaft may be integrally formed with the rotational shaft of the motor, and a worm may be formed on the outer peripheral surface to engage the worm wheel to rotate the worm wheel. The worm wheel may be coupled to engage the drive shaft 1390 to linearly move the drive shaft 1390, which in turn is coupled to and integrally operates with the hydraulic piston 1320, thereby allowing the hydraulic piston 1320 to slide within the cylinder block 1310.

In other words, when the displacement of the brake pedal 10 is sensed by the pedal displacement sensor 11, the sensed signal is transmitted to the electronic control unit, which drives the motor to rotate the worm shaft in one direction. The rotational force of the worm shaft is transmitted to the drive shaft 1390 via the worm wheel, so that the hydraulic piston 1320 connected to the driving shaft may generate a hydraulic pressure in the first pressure chamber 1330 while advancing in the cylinder block 1310.

Conversely, when the tread force of the brake pedal 10 is released, the electronic control unit drives the motor to rotate the worm shaft in the opposite direction. Thus, the worm wheel may also rotate in the opposite direction and the hydraulic piston 1320 connected to the drive shaft 1390 may generate a negative pressure in the first pressure chamber 1330 while reversing in the cylinder block 1310.

The generation of the hydraulic pressure and the negative pressure in the second pressure chamber 1340 may be realized by operating in the opposite direction. That is, when the displacement of the brake pedal 10 is sensed by the pedal displacement sensor 11, the sensed signal is transmitted to the electronic control unit, which drives the motor to rotate the worm shaft in the opposite direction. The rotational force of the worm shaft is transmitted to the drive shaft 1390 via the worm wheel, so that the hydraulic piston 1320 connected to the driving shaft may generate a hydraulic pressure in the second pressure chamber 1340 while moving backward in the cylinder block 1310.

On the other hand, when the tread force of the brake pedal 10 is released, the electronic control unit drives the motor in one direction to rotate the worm shaft in one direction. Thus, the worm wheel also rotates in the opposite direction and the hydraulic piston 1320 connected to the drive shaft 1390 may generate a negative pressure in the second pressure chamber 1340 while advancing in the cylinder block 1310.

As described above, the hydraulic pressure supply device 1300 may generate hydraulic pressure or negative pressure in each of the first pressure chamber 1330 and the second pressure chamber 1340 depending on the rotational direction of the worm shaft by driving the motor, and may determine whether to transmit hydraulic pressure to implement braking or to release braking using negative pressure by controlling the valves.

Meanwhile, the power conversion part according to the present embodiment is not limited to any structure as long as it may convert the rotational motion of the motor into the linear motion of hydraulic piston 1320, and it should be understood that the power conversion part is configured of various structures and systems.

The hydraulic pressure supply device 1300 may be hydraulically connected to the sub-reservoir 1100b by the dump control part 1800. The dump control part 1800 may include a first dump control part that controls the flow of pressurizing medium between the first pressure chamber 1330 and the sub-reservoir 1100b, and a second dump control part which controls the flow of the pressurizing medium between the second pressure chamber 1340 and the auxiliary reservoir 1120b. The first dump control part may include a first dump flow path 1810 that connects the first pressure chamber 1330 and the sub-reservoir 1100b, a first bypass flow path 1830 that branches and then remerges on the first dump flow path 1810, and the second dump control part may include: a second dump flow path 1820 that links the second pressure chamber 1340 and the auxiliary reservoir 2102b, and a second bypass flow path 1840, which branches and subsequently re-joins the second dump flow path 1820.

A first dump check valve 1811 and a first dump valve 1831 that control the flow of the pressurizing medium may be provided in the first dump flow path 1810 and the first bypass flow path 1830, respectively. The first dump check valve 1811 may be arranged to allow only a flow of pressurizing medium from the sub-reservoir 1100b to the first pressure chamber 1330, and to block the flow of the pressurizing medium in the opposite direction The first dump flow path 1810 may be provided with a first bypass flow path 1830 connected in parallel to the first dump check valve 1811, and the first bypass flow path 1830 may have a first dump valve 1831 for controlling the flow of the pressurizing medium between the first pressure chamber 1330 and the sub-reservoir 1100b .In other words, the first bypass flow path 1830 may bypass and connect the front end and the rear end of the first dump check valve 1811 on the first dump flow path 1810, and it may be provided as a two-way solenoid valve that controls the flow of pressurizing medium between the first pressure chamber 1330 and the sub-reservoir 1100b. The first dump valve 1831 may be provided as a normally closed type solenoid valve that is normally in a closed state and operates to open the valve upon receiving an electrical signal from the electronic control unit.

A second dump check valve 1821 and a second dump valve 1841 that control the flow of the pressurizing medium may be provided in the second dump flow path 1820 and the second bypass flow path 1840, respectively. The second dump check valve 1821 may be arranged to allow only a flow of pressurizing medium from the sub-reservoir 1100b to the second pressure chamber 1330, and to block the flow of the pressurizing medium in the opposite direction The second dump flow path 1820 may be provided with a second bypass flow path 1840 connected in parallel to the first dump check valves 1721, and the second bypass flow path 1840 may include a second dump valve 1841 for controlling the flow thereof between the second pressure chamber 1330 and the sub-reservoir 1100b.In other words, the second bypass flow path 1840 may bypass and connect the front end and the rear end of the second dump check valve 1821 on the second dump flow path 1820, and the second dump valve 1841 may be provided as a two-way solenoid valve that controls the flow of pressurizing medium between the second pressure chamber 1330 and the sub-reservoir 1100b.The second dump valve 1841 may be provided as a normal open-type solenoid valve that is normally open and operates to close the valve upon receiving an electrical signal from the electronic control unit.

In addition, the dump control part 1800 may include an auxiliary inflow path 1850 that connects the sub-reservoir 1100b and the second pressure chamber 1340 so that the pressure medium may be filled in the first pressure chamber 1350. The auxiliary inflow path 1850 may be connected to the rear (right side with reference to FIG. 1) of the chamber sealing member 1350c on the cylinder body 1310. As a result, the pressurizing medium flows into the second pressure chamber 1340 from the sub-reservoir 1100b through the auxiliary inflow path 1850, and the flow of pressurizing medium leaking into the auxiliary outflow path 2840 through the chamber sealing member 2350c may be blocked.

The hydraulic control unit 1400 may be provided to control the hydraulic pressure delivered to each wheel cylinder 20, and the electronic control unit ECU is provided for controlling the hydraulic pressure supply device 1300 and the various valves based on the hydraulic pressure information and the pedal displacement information.

The hydraulic control unit 1400 may include, among the four wheel cylinders 20, a first hydraulic circuit 1510 for controlling the flow of hydraulic pressure delivered to the first and second wheel cylinders 21, 22, and a second hydraulic circuit 1520 for controlling a flow of the hydraulic pressure transferred to the third and fourth wheel cylinder 23, 34, and includes a plurality of flow paths and valves for controlling hydraulic pressure delivered from the hydraulic pressure supply device 1300 to the wheel cylinder 30.

The first hydraulic flow path 1401 may be provided in communication with the first pressure chamber 1330, and the second hydraulic flow path 1502 may be arranged in communication therewith. After merging into the third hydraulic flow path 1403, the first and second hydraulic flow paths 1201 and 1302 may be provided so as to be branched again into a fourth hydraulic flow path 2404 connected to the first hydraulic circuit 1510 and a fifth hydraulic flow paths 2505 connected to a second hydraulic circuit.

The sixth hydraulic flow path 1406 is provided to communicate with the first hydraulic circuit 1510, and the seventh hydraulic flow paths 1407 are provided to communication with the second hydraulic circuit. After merging into the eighth hydraulic flow path 1408, the sixth and seventh hydraulic flow paths 1406 and 1407 may be provided so as to be branched again into the ninth hydraulic flow path 1409 communicating with the first pressure chamber 1330, and the tenth hydraulic flow path 1410 communicating with the second pressure chamber 1340.

A first valve 1431 for controlling the flow of the pressurizing medium may be provided in the first hydraulic flow path 1501. The first valve 1431 may be provided as a check valve to allow flow of pressurizing medium from the first pressure chamber 1330, but to shut off flow of the pressurizing medium in the opposite direction. The second hydraulic flow path 1402 may also be provided with a second valve 1332 for controlling the flow of pressurizing medium, which may be provided as a non-return valve for allowing flow of the pressurizing medium out of the second pressure chamber 1340, but for blocking flow of pressurizing medium in the opposite direction.

The fourth hydraulic flow path 1404 is provided so as to be branched again from the third hydraulic flow paths 1303 in which the first hydraulic flow path 3101 and the second hydraulic flow paths 3202 join to each other and connected to a first hydraulic circuit 1510. A third valve 1433 for controlling the flow of the pressurizing medium may be provided in the fourth hydraulic flow path 1204. The third valve 1433 may be provided as a check valve that allows only the flow of pressurizing medium from the third hydraulic flow path 1303 to the first hydraulic circuit 1510 and blocks the flow of pressurizing medium in the opposite direction.

The fifth hydraulic flow path 1405 is provided so as to be branched again from the third hydraulic flow paths 1303 in which the first hydraulic flow path 3101 and the second hydraulic flow paths 3202 join to each other and connected to a second hydraulic circuit 1520. A fourth valve 1434 for controlling the flow of the pressurizing medium may be provided in the fifth hydraulic flow path 1505. The fourth valve 1434 may be provided as a check valve that allows only the flow of pressurizing medium from the third hydraulic flow path 1303 to the second hydraulic circuit 1520, and blocks the reverse pressurizing medium flow.

The sixth hydraulic flow path 1406 is in communication with the first hydraulic circuit 1510, and the seventh hydraulic flow paths 1407 are provided so as to communicate with the second hydraulic circuit 1520 and to join with the eighth hydraulic flow path 1408. A fifth valve 1435 for controlling the flow of the pressurizing medium may be provided in the sixth hydraulic flow path 1406. The fifth valve 1435 may be provided as a check valve that allows only the flow of pressurizing medium discharged from the first hydraulic circuit 1510, and blocks the reverse pressurizing medium flow. Further, the seventh hydraulic flow path 1407 may be provided with a sixth valve 1436 for controlling the flow of the pressurizing medium. The sixth valve 1436 may be provided as a check valve that allows only the flow of pressurizing medium discharged from the second hydraulic circuit 1520, and blocks the reverse pressurizing medium flow.

The ninth hydraulic flow path 1409 is provided so as to be branched from the eighth hydraulic flow paths 1308 in which the sixth hydraulic flow path 1406 and the seventh hydraulic flow paths 1407 merge with each other and connected to the first pressure chamber 1330. A seventh valve 1437 for controlling the flow of the pressurizing medium may be provided in the ninth hydraulic flow path 1409. The seventh valve 1437 may be provided as a bi-directional control valve that controls the flow of the pressurizing medium delivered along the ninth hydraulic flow path 1409. The seventh valve 1437 may be provided as a normally closed type solenoid valve that is normally in a closed state and that operates to open the valve upon receiving an electrical signal from the electronic control unit.

The tenth hydraulic flow path 1410 is provided so as to be branched off from the eighth hydraulic flow path 1408 where the sixth and seventh hydraulic flow paths 1406, 1407 merge and connected to the second pressure chamber 1340. An eighth valve 1438 for controlling the flow of the pressurizing medium may be provided in the tenth hydraulic flow path 1410. The eighth valve 1438 may be provided as a bi-directional control valve that controls the flow of pressurizing medium delivered along the tenth hydraulic flow path 1410. The eighth valve 1438 may be provided as a normal closed-type solenoid valve that is normally in a closed state and operates to open the valve upon receiving an electrical signal from the electronic control unit, similarly to the seventh valve 2437.

The hydraulic control unit 1400 may transmit the hydraulic pressure formed in the first pressure chamber 1330 to the first hydraulic circuit 1510 through the first, third, and fourth hydraulic lines 1601, 1703, and 1804 in sequence, and may transmit to the second hydraulic circuit 1520 through the second, fifth, and first hydraulic lines 1905 in sequence. In addition, the hydraulic pressure formed in the second pressure chamber 1340 in response to the backward movement of the hydraulic piston 1320 may be transmitted to the first hydraulic circuit 1510 through the second hydraulic flow path 1402 and the fourth hydraulic flow paths 1204 in sequence, and may be transferred to the second fluid circuit 1520 through the first, third, and fifth hydraulic oils 1102.

Conversely, as the hydraulic piston 1320 moves backward, the negative pressure formed in the first pressure chamber 1330 may recover the pressurizing medium provided to the first hydraulic circuit 1510 to the first pressure chamber 1330 sequentially via the sixth hydraulic flow path 1406, the eighth hydraulic flow path 1408, and the ninth hydraulic flow path 1409, and the pressurizing medium provided to the second hydraulic circuit 1520 to the first pressure chamber 1330 sequentially via the seventh hydraulic flow path 1407, the eight hydraulic flow path 1408, and the ninth hydraulic flow path 1409. In addition, as the hydraulic piston 1320 advances, the negative pressure formed in the second pressure chamber 1340 may recover the pressurizing medium provided to the first hydraulic circuit 1510 into the first pressure chamber 1330 in sequence through the sixth hydraulic flow path 1406, the eighth hydraulic flow paths 1408, and the tenth hydraulic flow path 1410, and recover the pressurizing medium provided by the second hydraulic circuit 1520 into the second pressure chamber 1340.

The first hydraulic circuit 1510 of the hydraulic control unit 1400 may control the hydraulic pressures of the first and second wheel cylinders 21, 22, which are two of the four wheels RR, RL, FR, FL, and the second hydraulic circuit 1520 is capable of controlling the hydraulic pressure of the third and fourth wheel cylinder 23, 24, which is the other two wheel cylinders.

The first hydraulic circuit 1510 is provided with the hydraulic pressure through the fourth hydraulic flow path 1404, and may discharge the hydraulic fluid through the sixth hydraulic flow path 1406. To this end, as shown in FIG. 1, the fourth hydraulic flow path 1404 and the sixth hydraulic flow path 1406 may be provided so as to be branched into two flow paths that are connected to the first wheel cylinder 21 and the second wheel cylinder 22 after merging. In addition, the second hydraulic circuit 1520 is provided with the hydraulic pressure through the fifth hydraulic flow path 1405, and is capable of discharging the hydraulic fluid through the seventh hydraulic flow paths 1407, and thus, as shown in FIG. 1, may be provided to be branched into two flow paths connected to the third wheel cylinder 23 and the fourth wheel cylinders 24 after the fifth and seventh hydraulic flow paths 1405, 1407 merge. However, the connection to the hydraulic flow path shown in FIG. 1 is not limited to this structure as an example to facilitate understanding of the present invention, and the same should be understood when the fourth hydraulic flow path 1404 and the sixth hydraulic flow path 1406 are connected to the first hydraulic circuit 1510 side, the first wheel cylinder 21 and the second wheel cylinder 22 are independently branched and connected, and similarly, the fifth and seventh hydraulic fluids 1405 and 1407 are connected, respectively, to the second hydraulic circuit 1520 and the third and fourth wheel cylinders 23 and 24 are independently branched and connected.

The first and second hydraulic circuits 1510, 1520 may include first to fourth inlet valves 1511a, 1511b, 1521a, 1521b, respectively, which control the flow of pressurizing medium towards the first to the fourth wheel cylinders 21, 22, 23, 24.The first to fourth inlet valves 1511a, 1511b, 1521a, 1521b are respectively arranged on the upstream side of the first to the fourth wheel cylinders 21, 22, 23, 24, and may be provided as normal open-type solenoid valves which are normally open and which operate to close the valves upon receiving an electrical signal from the electronic control unit.

The first and second hydraulic circuits 1510, 1520 may include first to fourth check valves 1513a, 1513b, 1523a, 1523b that are provided in parallel connection with reference to the first to the fourth inlet valves 1511a, 1511b, 1521a, 1521b. The first to fourth check valves 1513a, 1513b, 1523a, 1523b may be provided in a bypass flow path connecting the front and the rear of the first to the fourth inlet valves 1511a, 1511b, 1521a, 1521b on the first and the second hydraulic circuit 1410 and 4520, allowing only a flow of pressurizing medium discharged from each wheel cylinder, and blocking the flow of the pressurizing medium from the hydraulic pressure supply device 1300 to the wheel cylinder. The hydraulic pressure of the pressurizing medium applied to each of the wheel cylinders may be quickly extracted by the first to fourth check valves 1513a, 1513b, 1523a, 1523b and, even when the first through fourth inlet valves 1511a, 1511b, 1521a, 1521b do not operate normally, the hydraulic pressure in the pressurizing medium applied to the wheel cylinder may be smoothly discharged.

The first hydraulic circuit 1510 may include first and second outlet valves 1512a, 1512b for regulating the discharge of pressurizing medium in order to improve performance when the first and the second wheel cylinders 21, 22 are released from braking. The first and second outlet valves 1512a, 1512b sense the brake pressure of the first and the second wheel cylinders 21, 22 and are selectively opened when a decompression brake such as an ABS dump mode is required, so as to discharge the pressurizing medium applied to the first and second wheel cylinders 21, 22 to the sub-reservoir 1100b through the first sub-reservoir flow path 1710 described later. The first and second outlet valves 1512a, 1512b may be provided as normally closed type solenoid valves that operate to open when they are normally closed and receive an electrical signal from the electronic control unit.

The second hydraulic circuit 1520 may include third and fourth outlet valves 1522a, 1522b for regulating the discharge of the pressurizing medium in order to improve the performance when releasing the braking of the third and the fourth wheel cylinders 23, 24.The third and fourth outlet valves 1522a, 1522b sense the brake pressure of the third and the fourth wheel cylinders 23, 24 and may be selectively opened when a decompression brake such as an ABS dump mode is required to discharge the pressurizing medium applied to the third and fourth wheel cylinders 23, 24 through the second sub-reservoir flow path 1720 described later. The third and fourth outlet valves 1522a, 1522b may be provided as normally closed type solenoid valves that operate to open when they are normally closed and receive an electrical signal from the electronic control unit.

The pedal simulator 1250 is arranged to provide a reaction force against a pedal force for actuation of the brake pedal 10 of the driver.

The pedal simulator 1250 has a front end connected to a third branch line 413 of a first connecting line 410, which will be described later, and a rear end connected by a simulator discharge flow path 1251 to the sub-reservoir 1100b.

The pedal simulator 1250 includes a simulator valve 413a that is provided in a third branch line 413 branched and connected to the first connecting line 410 and that controls the flow of the pressurizing medium, a simulation piston 1252a provided so as to be displaceable by a pressurizing medium that flows in through the third branching line 513, and a simulation chamber 1352b that is variable in volume by the displacement of the simulation piston 1252a and communicates with a simulator discharge flow path 1451 at a subsequent stage, and the simulation spring 335c that elastically supports the simulator piston 1122a.

The third branch line 413 may branch off at a first connecting line 410 described below and be connected to the front end of the pedal simulator 1250. The simulator valve 413a may be provided in the third branch line 413 to control the flow of the pressurizing medium. Simulator valve 413a may be provided as a normally closed type solenoid valve that remains closed during normal times, and simulator valve 131a may open and deliver pressurizing medium from master chamber 1220a to the front surface of simulation piston 1252a via the first connecting line 410 and third branch line 413 when the driver applies a tread force to brake pedal 10.

The simulation piston 1252a is provided so as to be displaceable in the simulation chamber 1152b by the pressurizing medium flowing in via the third branch line 413.Specifically, the hydraulic pressure of the pressurizing medium flowing through the third branch line 413 is transmitted to the front surface (right side surface with reference to FIG. 1) of the simulation piston 1252a to cause displacement of a simulation piston 1252a, and the pressurizing medium accommodated in the simulation chamber 1352b may be supplied to the sub-reservoir 1100b by the simulator discharge flow path 1451, while the volume of the simulations chamber 302b formed on the rear surface (left side surface, with reference to FIG. 1) is reduced. The simulation spring 1252c is pressurized in accordance with the displacement of the simulation piston 1252a by elastically supporting the simulation piston 1252a, and an elastic restoring force may be provided to the driver as a pedal feel.

Meanwhile, in the drawing, simulation spring 1252c is shown as a coil spring as an example, but in addition, it may be of various structures as long as it may provide an elastic force and an elastic restoring force at the same time as it provides simulation piston 1252a. As an example, it may be made of a material such as rubber or may be composed of various members capable of storing an elastic force such as a leaf spring.

The simulator discharge flow path 1251 may be connected to a rear end of the pedal simulator 1250 such that one end communicates with the simulation chamber 1252b and the other end joins the second sub-reservoir path 1720 described later. Thus, by connecting the simulation chamber 1252b and the sub-reservoir 1100b, it is possible to supply the pressurizing medium discharged from the simulation chamber 1252b to the sub-reservoir 1100b or, conversely, to supply the pressurizing medium from the sub-reservoir 1100b to the simulation chamber 1252b.

Referring to the operation of the pedal simulator 1250, when the driver operates the brake pedal 10 to apply a tread force, the master piston 1120 advances and the pressurizing medium in the master chamber 1220a is supplied and pressurized to the front surface of the simulation piston 1252a via the first connecting line 410 and the third branch line 413. To this end, the simulator valve 413a is opened. This causes the simulation spring 1252c to pressurize as a displacement occurs in the simulation piston 1252a, and the elastic restoring force of the simulation spring 1252c may be provided to the driver as a pedal feel. At this time, the pressurizing medium filled in the simulation chamber 1252b is transmitted to the sub-reservoir 1100b via the simulator discharge flow path 1251 and the second sub-reservoir path 1720.Then, when the driver releases the depression force of the brake pedal 10, the simulation piston 1252a returns to its original position while the simulation spring 1352c expands due to the elastic restoring force, and the pressurizing medium that has pressurized the front surface of the simulation plunger 1452b returns to the master chamber 1220a via the third branch line 413 and the first connecting line 410, respectively. The simulation chamber 1252b is supplied with a pressurizing medium from the sub-reservoir 1100b through the second sub-reservoir flow path 1720 and the simulator discharge flow path 1251 in this order, and the inside of the simulation chamber 1252b may be filled with the pressurizing medium again.

In this way, since the interior of the simulation chamber 1252b is always filled with the pressurizing medium, friction in the simulation piston 1252a is minimized during operation of the pedal simulator 1250, so that durability of the pedal simulator 1250 is improved, and entry of foreign matters from the outside may be blocked.

The folding dump valve 414a is provided to discharge pressurizing medium contained in the master chamber 1220a to the sub-reservoir 1100b when the brake pedal 10 is advanced or received by the pedal folding device 1350.

As described above, when the brake pedal 10 is received by the pedal folding device 1250, the master piston 1120 connected thereto may also be advanced together as the braking pedal 20 is advanced, thereby increasing the hydraulic pressure of the pressurizing medium received in the master chamber 1220a. In the case where the hydraulic pressure of the pressurizing medium is transmitted to the hydraulic circuit or the wheel cylinder side described later, unintended braking may occur, and the folding dump valve 414a discharges the pressurizing medium contained in the master chamber 1220a to the sub-reservoir 1100b, thereby preventing a malfunction of braking.

The folding dump valve 414a may be provided in a fourth branch line 414 branched and connected to the first connecting line 100 to control the flow of the pressurizing medium. The folding dump valve 414a may be provided as a normally closed type solenoid valve that normally remains closed, and may be opened upon actuation of the pedal folding device 1250 to discharge pressurizing medium from the master chamber 1220a via the first connecting line 410 and the fourth branch line 414 to the sub-reservoir 100b. A fourth branch line 414, which will be described later, may be joined to the second sub-reservoir flow path 1720 and connected to the sub-reservoir 1100b.

Meanwhile, the sub-reservoir 1100b may be provided by being partitioned into a plurality of chambers by the partition wall 1105b.The sub-reservoir 1100b includes a plurality of sub-reservoir chambers 101b, 1202b, and 1303b, wherein the plurality of the sub-reservoir chamber 1401a, 240b may be arranged side by side in a row. Specifically, the sub-reservoir 1100b may be divided into a first sub-reservoir chamber 101b disposed in the central portion, a second sub-reservoir chambers 1202b disposed on one side, and a third sub-reservoir space 1303b disposed at the other side.

A partition wall 1105b may be provided between adjacent sub-reservoir chambers, respectively, and each partition wall may be arranged such that at least a portion of an upper end thereof is open. As a result, the adjacent sub-reservoir chambers 1101b, 1202b, and 1303b communicate with each other so that the pressurizing medium may move. As an example, when a large amount of pressurizing medium is introduced into the first sub-reservoir chamber 1101b, the pressurizing medium may pass through the upper end of the partition wall 1105b and be delivered to the second or third sub-reservoir chamber 1102b or 1103b.

The first sub-reservoir chamber 1101b and the third sub-reservoir chamber 1103b may be connected to a first dump control part and a second dump control part, respectively, and the second sub-reservoir chamber is connected to the second connecting line 420 and the first and second hydraulic circuits 1510, 1520, which will be described later, so that pressurizing medium may be delivered to each other.

As described above, since the sub-reservoir 1100b is divided and provided in the first to third sub-reservoir chambers 1101b, 1102b, and 1103b, the electronic brake system 1 may be operated stably. In one example, when the sub-reservoir 1100b is formed of one chamber and the amount of pressurizing medium to be accommodated is insufficient, the pressurizing medium cannot be stably supplied to the side of the dump control part 1800 and the hydraulic pressure supply device 1300 as well as the main reservoir 1100a. Therefore, since the sub-reservoirs 1100b separately provide the first to third sub-reservoir chambers 1201b, 1302b, and 1403b, even if the pressurizing medium cannot be supplied to one component element, the vehicle may be braked by supplying the pressurizing medium to the other component element.

The sub-reservoir flow path is provided so as to hydraulically connect the first hydraulic circuit 1510, the second hydraulic circuit 1520, and the hydraulic pressure supply device 1300 to the sub-reservoir 1100b.The sub-reservoir flow path may include a first sub-reservoir flow path 1710 that connects the sub-reservoir 1100b and the rear end of the first hydraulic circuit 1510, a second sub-reservoir flow path 1720 that couples the sub-reservoir 1100b to the rear ends of the second hydraulic circuit 1520, a third sub-reservoir flow path 1730 to couple the sub-reservoir 1100b to the first dump control part, and a fourth sub-reservoir flow path 1740 for coupling the sub-reservoir 1100b and the second dump control part.

The first sub-reservoir flow path 1710 may have one end connected to the second sub-reservoir chamber 1102b of the sub-reservoir 1100b, and the other end connected downstream of the first and second outlet valves 1512a, 1512b in the first hydraulic circuit 1510.Further, one end of the second sub-reservoir flow path 1720 is connected to the second sub-reservoir chamber 1102b of the sub-reservoir 1100b , and the other end is connected downstream of the third and fourth outlet valves 1522a, 1522b in the second hydraulic circuit 1520, and a simulator discharge flow path 1251 may join the middle part. In addition, one end of the third sub-reservoir flow path 1730 may be connected to the third sub-reservoir chamber 1103b of the sub-reservoir 1100b, the other end thereof may be coupled to the first dump control part side, and the fourth sub-reservoir flow path 1740 may have one end thereof connected to a first sub-dump chamber 2101b of a sub-reservoir 1100b.

The electronic part may include a first circuit pressure sensor PS11 that senses the hydraulic pressure of the pressurizing medium transmitted from the hydraulic pressure supply device 1300 to the first hydraulic circuit 1510, a second circuit pressure sensors PS12 that sense the hydraulic pressures of the pressurization medium transmitted to the second hydraulic circuit 1520 from the hydraulic pressure supply device, and a cylinder pressure sensor P2 that senses hydraulic pressure in the master chamber 1220a.

The first circuit pressure sensor PS11 may sense the hydraulic pressure of the pressurizing medium generated and provided from the hydraulic pressure supply device 1300 and delivered to the first hydraulic circuit 1510, and send pressure value information to the electronic control unit. Further, the second circuit pressure sensor PS12 may sense the hydraulic pressure of the pressurizing medium generated and provided from the hydraulic pressure supply device 1300 and transmitted to the second hydraulic circuit 1520, and send the pressure value information to the electronic control unit. The electronic control unit receives the hydraulic pressure value information of each hydraulic circuit from the first and second circuit pressure sensors PS11 and PS12, and may control the operation of the hydraulic pressure supply device 1300 based thereon, thereby assisting autonomous driving and braking of the vehicle, such as highway driving assistance and emergency braking.

As an example, the first and second wheel cylinders 21, 22 provided in the first hydraulic circuit 1510 may be assigned to the left front wheel FL and the right rear wheel RR, respectively, and the third and fourth wheel cylinder 23, 24 provided in a second hydraulic circuit may be assigned (X-split) to a left rear wheel RL and a right front wheel FR, and a first circuit pressure sensor PS11 may sense and send the hydraulic pressure applied to the wheel cylinders of the left rear and right rear wheels, respectively. The electronic control unit automatically adjusts and controls the braking pressure of the vehicle based on the hydraulic pressure information of the wheel cylinders provided from the first circuit pressure sensor PS11 and the second circuit pressure sensor PS21, respectively, so as to assist the driver in driving.

The cylinder pressure sensor PS2 is provided between the master chamber 1220a and the first cut valve 411a on a first connecting line 410, which will be described later, and is capable of sensing the pressurizing medium hydraulic pressure in the master chamber 1220a.The pressure value information of the pressurizing medium sensed by the cylinder pressure sensor PS2 may be sent to an electronic control unit, which may perform an inspection mode or obtain traveling or braking information of a vehicle, based on the pressure values sensed by circuit pressure sensors PS11 and PS12 and the pressure value sensed by a cylinder pressure sensing PS2.

In addition, the electronic part may include a first cut valve 411a provided in a first branch line 411 of a first connecting line 410 to be described later to control the flow of the pressurizing medium, and a second cut valve 412a provided in the second branch line 412 of the first connecting line 410, to be discussed later, to control a flow of a pressurizing medium. Details thereof will be described later.

The connecting line 400 is arranged to hydraulically connect the first block 100 of the operating part and the second block 200 of the electronic part, which are arranged at a distance from each other.

The connecting line 400 may include a first connecting line 410 that connects the master cylinder 1200 of the operation portion to the first hydraulic circuit 1510, the second hydraulic circuit 1520, the pedal simulator 1250, and the folding dump valve 414a side of the hydraulic control unit 1400, and a second connecting line 420 that interconnects the main reservoir 1100a of the operating part and the sub-reservoir 1100b of the electronic part.

The first connecting line 410 may be branched into a first branch line 411, one end of which is connected to the master chamber 1220a of the master cylinder 1200, and the other end to a first hydraulic circuit 1510, a second branch line 412 connected to a second hydraulic circuit 1520, a third branch line 413 connected to front end of the pedal simulator 1250, and a fourth branch line 414 for discharging pressurizing medium when the brake pedal is folded.

The first branch line 411 is provided with a first cut valve 401a to control the flow of pressurizing medium between the master chamber 1220a of the master cylinder 1200 and the first hydraulic circuit 1510. The first cut valve 411a may be provided as a normally open type solenoid valve which is normally open and which operates to close the valve when receiving a closing signal from the electronic control unit.

In the normal operating mode, which is a normal braking situation, the first cut valve 411a is controlled to be closed, so that the pressurizing medium contained in the master chamber 1220a is not transmitted to the first hydraulic circuit 1510 side despite the tread force of the brake pedal 10.In addition, in the normal operation mode, the first cut valve 411a is controlled to be closed, so that the hydraulic pressure of the pressurizing medium provided in the hydraulic-pressure supplying device 1300 may be stably supplied toward the wheel cylinders 21, 22, 23, 24 and the wheel cylinder 24 without leaking to the master cylinder 1200 side along the first branch line 411.

However, the first cut valve 411a is in the open state in the fallback mode, which is switched when the electronics are disabled, so that the pressurizing medium discharged from the master chamber 1220a of the master cylinder 1200 may be supplied to the first and second wheel cylinders 21, 22 via the first connecting line 410 to implement braking.

The second branch line 412 is provided with a second cut valve 402a to control the flow of pressurizing medium between the master chamber 1220a of the master cylinder 1200 and the second hydraulic circuit 1520. The second cut valve 412a may be provided as a normally open type solenoid valve which is normally open and which operates to close the valve when receiving a closing signal from the electronic control unit.

In the normal operating mode, which is the normal braking situation, the second cut valve 412a is controlled to be closed, so that the pressurizing medium contained in the master chamber 1220a is not transmitted to the second hydraulic circuit 1520 side despite the tread force of the brake pedal 10. In addition, in the normal operation mode, the second cut valve 412a is controlled to be closed, so that the hydraulic pressure of the pressurizing medium provided in the hydraulic-pressure supplying device 1300 may be stably supplied toward the wheel cylinders 21, 22, 23, 24 without leaking to the master cylinder 1200 side along the second branch line 412.

However, the second cut valve 412a is in the open state in the fallback mode, which is switched when the electronics are disabled, so that the pressurizing medium discharged from the master chamber 1220a of the master cylinder 1200 may be supplied to the third and fourth wheel cylinders 23, 24 via the second branch line 412 to implement braking.

As described above, the third branch line 413 is provided with a simulator valve 403a, so that the flow of the pressurizing medium between the master chamber 1220a of the master cylinder 1200 and the sub-reservoir 1120b may be controlled. The simulator valve 413a is controlled to be open in the normal operating mode, so that the pressurizing medium contained in the master chamber 1220a may be fed via the third branch line 413 to the pedal simulator 1250, thereby providing the driver with a pedal feel. On the other hand, the simulator valve 413a is placed in the closed state in the fallback mode, so that the pressurizing medium discharged from the master chamber 1220a of the master cylinder 1200 may be supplied to the first and second hydraulic circuits 1510, 1420 side in full.

As described above, the fourth branch line 414 is provided with a folding dump valve 414a, so that the flow of pressurizing medium between the master chamber 1220a and the sub-reservoir 1100b of the master cylinder 1200 may be controlled. The folding dump valve 414a is controlled to an open state when the brake pedal 10 is advanced or received by the pedal folding device 1250, so that the pressurizing medium contained in the master chamber 1120a may be discharged to the sub-reservoir 1300b.

The second connecting line 420 may be provided so that one end communicates with the main reservoir 1100a and the other end communicates therewith. The second connecting line 420 allows the delivery of the pressurizing medium between the reservoirs when there is too much or little pressurizing medium in one of the reservoirs, thereby allowing a smooth supply of pressurizing medium to each component.

The first connecting line 410 may be provided as a pipe having a predetermined strength, and the second connection line 420 as a hose having elasticity. The first connecting line 410 is provided with a pipe having a strength capable of withstanding the hydraulic pressure, and the durability and performance of the product may be achieved, since the pressurizing medium formed with the fluid pressure is transmitted from the master chamber 1220a.Meanwhile, the second connecting line 420 is provided to be connected to the main reservoir 1100a or the sub-reservoir 1100b having an internal pressure of an atmospheric pressure level, and a pressurizing medium in which no hydraulic pressure is formed is delivered. Therefore, the first block 100 and the second block 200 may be provided with a hose or the like having elasticity so as to facilitate installation according to an arrangement position of the first block 100 and the second block 200.The first and second connecting lines 410, 420 may be installed on the vehicle body by a fastening member (not shown) having a predetermined restoring force so as to maintain connectivity despite an impact such as an accident of the vehicle.

## Claims

1. An electronic brake system (1) comprising:
a first block (100) in which an operating part operated in conjunction with a brake pedal (10) is arranged;
a second block (200) in which an electronic part that is electronically operated and controlled by an electronic control unit is arranged, and which is arranged spaced apart from the first block (100); and
a connecting line (400) for hydraulically connecting the first block (100) and the second block (200) to each other,
wherein: the operating part comprises a master cylinder (1200) having a master piston (1420) connected to the brake pedal (10) and a master chamber (1220a) whose volume is variable by displacement of the master piston (1420), and
the electronic part comprises a hydraulic control unit (1400) including a pedal simulator (1250), a hydraulic pressure supply device (1300) for generating hydraulic pressure by actuating a hydraulic piston (1320) by an electric signal, a first hydraulic circuit (1510) for controlling hydraulic pressure transmitted to two wheel cylinders (21, 22,9, and a second hydraulic circuit (1520) for controlling the hydraulic pressure to be transmitted to other two wheel cylinders (23, 24);
**characterized in that**
the operating part comprises a pedal folding device (1250) provided between the master piston (1420) and the brake pedal (10); and
the connecting line (1400) comprises a first connecting line (410) having a first branch line (411) connected at one end to the master chamber (1220a) and at the other end to be branched and connected to the first hydraulic circuit (1510), a second branch line (412) connected to the second hydraulic circuit (1520) and a third branch line (413) to be connected to the pedal simulator (1250).

2. The electronic brake system according to claim 1, wherein the pedal folding device comprises: an actuator (1351) for generating and providing power; and a gear part (1452) disposed between the actuator (1351) and an input rod to convert a rotational force of the actuator (1351) into a linear motion of the input rod.

3. The electronic brake system according to claim 1, wherein the operating part further comprises a main reservoir (1100a) in which a pressurizing medium is stored, the electronic part further comprises a sub-reservoir (1100b) in which a pressurizing medium is stored, and the connecting line (1400) further comprises a second connecting line (420) having one end connected to the main reservoir (1100a), and the other end connected to the sub-reservoir (1100b).

4. The electronic brake system according to claim 3, wherein the first connecting line (410) further comprises a fourth branch line (414) which has the other end which branches off and is connected to the sub-reservoir (1100b).

5. The electronic brake system according to claim 1, further comprising: a first cut valve (411a) provided in the first branch line (411) to control a flow of a pressurizing medium; and a second cut valve (412a) provided in the second branch line (412) to control a flow of a pressurizing medium.

6. The electronic brake system according to claim 5, wherein the electronic part further comprises a simulator valve (403a) provided in the third branch line (413) to control a flow of a pressurizing medium.

7. The electronic brake system according to claim 4, wherein the electronic part further comprises a folding dump valve (414a) provided in the fourth branch line (414) to control a flow of a pressurizing medium.

8. The electronic brake system according to claim 7, wherein the electronic part further comprises a first sub-reservoir flow path (1710) connecting the sub-reservoir (1100b) and a rear end of the first hydraulic circuit (1510), and a second sub-reservoir flow path (1720) connecting the sub-reservoir (1100b) and a rear end of the second hydraulic circuit (1520).

9. The electronic brake system according to claim 8, wherein the fourth branch line (414) is joined to the second sub-reservoir flow path (1720) and connected to the sub-reservoir (1100b).

10. The electronic brake system according to claim 8, wherein the electronic part further comprises a simulator discharge flow path (1251) connected to a rear end of the pedal simulator (1250), and the simulator discharge flow path (1251) joins the second sub-reservoir flow path (1720) and is connected to the sub-reservoir (1100b).

11. The electronic brake system according to claim 8, wherein the hydraulic pressure supply device (1300) comprises a first pressure chamber (1130) provided in front of a hydraulic piston (1320) and a second pressure chamber (1340) provided in rear of the hydraulic piston (1320).

12. The electronic brake system according to claim 11, wherein the electronic part further comprises a dump control part provided between the sub-reservoir (1100b) and the hydraulic pressure supply device (1300) to control a flow of a pressurizing medium, and the dump control part comprises a first dump control part for controlling a flow of a pressurizing medium between the first pressure chamber (1130) and the sub-reservoir (1100b), and a second dump control part for controlling a flow of a pressurizing medium between the second pressure chamber (1340) and the sub-reservoir (1100b).

13. The electronic brake system according to claim 12, wherein the electronic part further comprises a third sub-reservoir flow path (1730) connecting the sub-reservoir (1100b) and the first dump control part, and a fourth sub-reservoir flow path (1740) connecting the sub-reservoir (1100b) and the second dump control part.

14. The electronic brake system according to claim 8, wherein: the first hydraulic circuit (1510) comprises a first inlet valve and a second inlet valve that control a flow of a pressurizing medium supplied from the hydraulic pressure supply device (1300) to the first wheel cylinder (21) and the second wheel cylinder (22), respectively, and a first outlet valve and second outlet valve that respectively control a flow of a pressurizing medium discharged from the first and second wheel cylinders (21, 22); the second hydraulic circuit (1520) comprises a third inlet valve and a fourth inlet valve for controlling a flow of a pressurizing medium supplied from the hydraulic pressure supply device (1300) to the third wheel cylinder (23) and the fourth wheel cylinder (24), respectively, and a third outlet valve and a fourth outlet valve for respectively controlling a flow of a pressurizing medium discharged from the third and fourth wheel cylinders (23, 24); the pressurizing medium discharged via the first and second outlet valves is supplied to the first sub-reservoir flow path (1710); and the pressurizing medium discharged via the third and fourth outlet valves is supplied to the second sub-reservoir flow path (1720).

15. The electronic brake system according to claim 3, wherein the first connecting line (410) is provided as a rigid pipe, and the second connecting line (420) is provided as an elastic hose.

## Patentansprüche

1. Elektronisches Bremssystem (1), umfassend:
einen ersten Block (100), in dem ein in Verbindung mit einem Bremspedal (10) betätigtes Bedienteil angeordnet ist;
einen zweiten Block (200), in dem ein elektronisches Teil angeordnet ist, das von einer elektronischen Steuereinheit elektronisch betrieben und gesteuert wird, und der von dem ersten Block (100) beabstandet angeordnet ist; und
eine Verbindungsleitung (400) zum hydraulischen Verbinden des ersten Blocks (100) und dem zweiten Block (200) miteinander,
wobei: das Bedienteil einen Hauptzylinder (1200) mit einem mit dem Bremspedal (10) verbundenen Hauptkolben (1420) und einer Hauptkammer (1220a) umfasst, deren Volumen durch Verschiebung des Hauptkolbens (1420) veränderbar ist, und
das elektronische Teil eine hydraulische Steuereinheit (1400) umfasst, die einen Pedalsimulator (1250), eine hydraulische Druckversorgungsvorrichtung (1300) zum Erzeugen von hydraulischem Druck durch Betätigen eines hydraulischen Kolbens (1320) durch ein elektrisches Signal, einen ersten Hydraulikkreis (1510) zum Steuern des hydraulischen Drucks, der auf zwei Radzylinder (21, 22) übertragen wird, und einen zweiten Hydraulikkreis (1520) zum Steuern des hydraulischen Drucks, der auf andere zwei Radzylinder (23, 24) übertragen werden soll, enthält;
**dadurch gekennzeichnet, dass**
das Bedienteil eine Pedalklappvorrichtung (1250) umfasst, die zwischen dem Hauptkolben (1420) und dem Bremspedal (10) vorgesehen ist; und
die Verbindungsleitung (1400) eine erste Verbindungsleitung (410) mit einer ersten Zweigleitung (411), die an einem Ende mit der Hauptkammer (1220a) verbunden ist und am anderen Ende verzweigt und mit dem ersten Hydraulikkreis (1510) verbunden werden soll, eine zweite Zweigleitung (412), die mit dem zweiten Hydraulikkreis (1520) verbunden ist, und eine dritte Zweigleitung (413), die mit dem Pedalsimulator (1250) verbunden werden soll, umfasst.

2. Elektronisches Bremssystem nach Anspruch 1, wobei die Pedalklappvorrichtung umfasst: einen Aktuator (1351) zur Erzeugung und Bereitstellung von Energie; und ein Getriebeteil (1452), das zwischen dem Aktuator (1351) und einer Eingangsstange angeordnet ist, um eine Drehkraft des Aktuators (1351) in eine lineare Bewegung der Eingangsstange umzuwandeln.

3. Elektronisches Bremssystem nach Anspruch 1, wobei das Bedienteil ferner einen Hauptbehälter (1100a) umfasst, in dem ein Druckmedium gespeichert ist, das elektronische Teil ferner einen Nebenbehälter (1100b) umfasst, in dem ein Druckmedium gespeichert ist, und die Verbindungsleitung (1400) ferner eine zweite Verbindungsleitung (420) umfasst, deren eines Ende mit dem Hauptbehälter (1100a) und deren anderes Ende mit dem Nebenbehälter (1100b) verbunden ist.

4. Elektronisches Bremssystem nach Anspruch 3, wobei die erste Verbindungsleitung (410) ferner eine vierte Zweigleitung (414) aufweist, deren anderes Ende abzweigt und mit dem Nebenbehälter (1100b) verbunden ist.

5. Elektronisches Bremssystem nach Anspruch 1, ferner umfassend: ein erstes Absperrventil (411a), das in der ersten Zweigleitung (411) vorgesehen ist, um eine Strömung eines Druckmediums zu steuern; und ein zweites Absperrventil (412a), das in der zweiten Zweigleitung (412) vorgesehen ist, um eine Strömung eines Druckmediums zu steuern.

6. Elektronisches Bremssystem nach Anspruch 5, wobei das elektronische Teil ferner ein Simulatorventil (403a) umfasst, das in der dritten Zweigleitung (413) vorgesehen ist, um eine Strömung eines Druckmediums zu steuern.

7. Elektronisches Bremssystem nach Anspruch 4, wobei das elektronische Teil ferner ein klappbares Ablassventil (414a) umfasst, das in der vierten Zweigleitung (414) vorgesehen ist, um eine Strömung eines Druckmediums zu steuern.

8. Elektronisches Bremssystem nach Anspruch 7, wobei das elektronische Teil ferner einen ersten Nebenbehälterströmungspfad (1710), der den Nebenbehälter (1100b) und ein hinteres Ende des ersten Hydraulikkreises (1510) verbindet, und einen zweiten Nebenbehälterströmungspfad (1720), der den Nebenbehälter (1100b) und ein hinteres Ende des zweiten Hydraulikkreises (1520) verbindet, umfasst.

9. Elektronisches Bremssystem nach Anspruch 8, bei dem die vierte Zweigleitung (414) an den zweiten Nebenbehälterströmungspfad (1720) angeschlossen ist und mit dem Nebenbehälter (1100b) verbunden ist.

10. Elektronisches Bremssystem nach Anspruch 8, wobei das elektronische Teil ferner einen Simulatorauslassströmungspfad (1251) umfasst, der mit einem hinteren Ende des Pedalsimulators (1250) verbunden ist, und der Simulatorauslassströmungspfad (1251) in den zweiten Nebenbehälterströmungspfad (1720) mündet und mit dem Nebenbehälter (1100b) verbunden ist.

11. Elektronisches Bremssystem nach Anspruch 8, wobei die hydraulische Druckversorgungsvorrichtung (1300) eine erste Druckkammer (1130), die vor einem Hydraulikkolben (1320) vorgesehen ist, und eine zweite Druckkammer (1340), die hinter dem Hydraulikkolben (1320) vorgesehen ist, umfasst.

12. Elektronisches Bremssystem nach Anspruch 11, wobei das elektronische Teil ferner ein Ablasssteuerteil umfasst, das zwischen dem Nebenbehälter (1100b) und der hydraulischen Druckversorgungsvorrichtung (1300) vorgesehen ist, um eine Strömung eines Druckmediums zu steuern, und das Ablasssteuerteil ein erstes Ablasssteuerteil zum Steuern einer Strömung eines Druckmediums zwischen der ersten Druckkammer (1130) und dem Nebenbehälter (1100b) und ein zweites Ablasssteuerteil zum Steuern einer Strömung eines Druckmediums zwischen der zweiten Druckkammer (1340) und dem Nebenbehälter (1100b) umfasst.

13. Elektronisches Bremssystem nach Anspruch 12, wobei das elektronische Teil ferner einen dritten Nebenbehälterströmungspfad (1730), der den Nebenbehälter (1100b) und das erste Ablasssteuerteil verbindet, und einen vierten Nebenbehälterströmungspfad (1740), der den Nebenbehälter (1100b) und das zweite Ablasssteuerteil verbindet, umfasst.

14. Elektronisches Bremssystem nach Anspruch 8, wobei: der erste Hydraulikkreis (1510) ein erstes Einlassventil und ein zweites Einlassventil umfasst, die eine Strömung eines von der hydraulischen Druckversorgungsvorrichtung (1300) dem ersten Radzylinder (21) bzw. dem zweiten Radzylinder (22) zugeführten Druckmediums steuern, und ein erstes Auslassventil und ein zweites Auslassventil, die eine Strömung eines von dem ersten und dem zweiten Radzylinder (21, 22) abgegebenen Druckmediums steuern; der zweite Hydraulikkreis (1520) ein drittes Einlassventil und ein viertes Einlassventil zum Steuern einer Strömung eines Druckmediums, das von der hydraulischen Druckversorgungsvorrichtung (1300) dem dritten Radzylinder (23) bzw. dem vierten Radzylinder (24) zugeführt wird, und ein drittes Auslassventil und ein viertes Auslassventil zum Steuern einer Strömung eines Druckmediums, das jeweils von dem dritten und vierten Radzylinder (23, 24) abgegeben wird, das über das erste und das zweite Auslassventil abgegebene Druckmedium dem ersten Nebenbehälterströmungspfad (1710) zugeführt wird; und das über das dritte und das vierte Auslassventil abgegebene Druckmedium dem zweiten Nebenbehälterströmungspfad (1720) zugeführt wird.

15. Elektronisches Bremssystem nach Anspruch 3, wobei die erste Verbindungsleitung (410) als starres Rohr und die zweite Verbindungsleitung (420) als elastischer Schlauch ausgebildet ist.

## Revendications

1. Système de frein électronique (1) comprenant :
un premier bloc (100) à l'intérieur duquel une partie d'activation qui est activée en conjonction avec une pédale de frein (10) est agencée ;
un second bloc (200) à l'intérieur duquel une partie électronique qui est activée et commandée électroniquement par une unité de commande électronique est agencée, et qui est agencé à distance du premier bloc (100) ; et
une ligne de connexion (400) pour connecter hydrauliquement l'un à l'autre le premier bloc (100) et le second bloc (200),
dans lequel : la partie d'activation comprend un maître-cylindre (1200) qui comporte un piston de maître (1420) qui est connecté à la pédale de frein (10) et une chambre de maître (1220a) dont le volume peut être modifié par le déplacement du piston de maître (1420), et
la partie électronique comprend une unité de commande hydraulique (1400) qui inclut un simulateur de pédale (1250), un dispositif d'alimentation en pression hydraulique (1300) pour générer de la pression hydraulique en actionnant un piston hydraulique (1320) au moyen d'un signal électrique, un premier circuit hydraulique (1510) pour commander la pression hydraulique qui est transmise à deux cylindres de roue (21, 22) et un second circuit hydraulique (1520) pour commander la pression hydraulique qui doit être transmise à deux autres cylindres de roue (23, 24) ;
**caractérisé en ce que** :
la partie d'activation comprend un dispositif de rabattement de pédale (1250) qui est prévu entre le piston de maître (1420) et la pédale de frein (10) ; et
la ligne de connexion (400) comprend une première ligne de connexion (410) qui comporte une première ligne de dérivation (411) qui est connectée au niveau d'une extrémité à la chambre de maître (1220a) et qui, au niveau de son autre extrémité, est destinée à être dérivée et connectée au premier circuit hydraulique (1510), une deuxième ligne de dérivation (412) qui est connectée au second circuit hydraulique (1520) et une troisième ligne de dérivation (413) qui est destinée à être connectée au simulateur de pédale (1250).

2. Système de frein électronique selon la revendication 1, dans lequel le dispositif de rabattement de pédale comprend : un actionneur (1351) pour générer et fournir de la puissance ; et une partie d'engrenage (1452) qui est disposée entre l'actionneur (1351) et une tige d'entrée pour convertir une force de rotation de l'actionneur (1351) selon un mouvement linéaire de la tige d'entrée.

3. Système de frein électronique selon la revendication 1, dans lequel la partie d'activation comprend en outre un réservoir principal (1100a) à l'intérieur duquel un milieu de pressurisation est stocké, la partie électronique comprend en outre un sous-réservoir (1100b) à l'intérieur duquel un milieu de pressurisation est stocké, et la ligne de connexion (400) comprend en outre une seconde ligne de connexion (420) qui comporte une extrémité qui est connectée au réservoir principal (1100a) et dont l'autre extrémité est connectée au sous-réservoir (1100b).

4. Système de frein électronique selon la revendication 3, dans lequel la première ligne de connexion (410) comprend en outre une quatrième ligne de dérivation (414) dont l'autre extrémité est dérivée et est connectée au sous-réservoir (1100b).

5. Système de frein électronique selon la revendication 1, comprenant en outre : une première soupape de coupure (411a) qui est prévue dans la première ligne de dérivation (411) pour commander un écoulement d'un milieu de pressurisation ; et une seconde soupape de coupure (412a) qui est prévue dans la deuxième ligne de dérivation (412) pour commander un écoulement d'un milieu de pressurisation.

6. Système de frein électronique selon la revendication 5, dans lequel la partie électronique comprend en outre une soupape de simulateur (403a) qui est prévue dans la troisième ligne de dérivation (413) pour commander un écoulement d'un milieu de pressurisation.

7. Système de frein électronique selon la revendication 4, dans lequel la partie électronique comprend en outre une soupape de vidange rabattable (414a) qui est prévue dans la quatrième ligne de dérivation (414) pour commander un écoulement d'un milieu de pressurisation.

8. Système de frein électronique selon la revendication 7, dans lequel la partie électronique comprend en outre une première voie d'écoulement de sous-réservoir (1710) qui connecte le sous-réservoir (1100b) et une extrémité arrière du premier circuit hydraulique (1510) et une deuxième voie d'écoulement de sous-réservoir (1720) qui connecte le sous-réservoir (1100b) et une extrémité arrière du second circuit hydraulique (1520).

9. Système de frein électronique selon la revendication 8, dans lequel la quatrième ligne de dérivation (414) rejoint la deuxième voie d'écoulement de sous-réservoir (1720) et est connectée au sous-réservoir (1100b).

10. Système de frein électronique selon la revendication 8, dans lequel la partie électronique comprend en outre une voie d'écoulement de décharge de simulateur (1251) qui est connectée à une extrémité arrière du simulateur de pédale (1250), et la voie d'écoulement de décharge de simulateur (1251) rejoint la deuxième voie d'écoulement de sous-réservoir (1720) et est connectée au sous-réservoir (1100b).

11. Système de frein électronique selon la revendication 8, dans lequel le dispositif d'alimentation en pression hydraulique (1300) comprend une première chambre de pression (1130) qui est prévue à l'avant d'un piston hydraulique (1320) et une seconde chambre de pression (1340) qui est prévue à l'arrière du piston hydraulique (1320).

12. Système de frein électronique selon la revendication 11, dans lequel la partie électronique comprend en outre une partie de commande de vidange qui est prévue entre le sous-réservoir (1100b) et le dispositif d'alimentation en pression hydraulique (1300) pour commander un écoulement d'un milieu de pressurisation, et la partie de commande de vidange comprend une première partie de commande de vidange pour commander un écoulement d'un milieu de pressurisation entre la première chambre de pression (1130) et le sous-réservoir (1100b) et une seconde partie de commande de vidange pour commander un écoulement d'un milieu de pressurisation entre la seconde chambre de pression (1340) et le sous-réservoir (1100b).

13. Système de frein électronique selon la revendication 12, dans lequel la partie électronique comprend en outre une troisième voie d'écoulement de sous-réservoir (1730) qui connecte le sous-réservoir (1100b) et la première partie de commande de vidange et une quatrième voie d'écoulement de sous-réservoir (1740) qui connecte le sous-réservoir (1100b) et la seconde partie de commande de vidange.

14. Système de frein électronique selon la revendication 8, dans lequel : le premier circuit hydraulique (1510) comprend une première soupape d'entrée et une deuxième soupape d'entrée qui commandent respectivement un écoulement d'un milieu de pressurisation qui est alimenté depuis le dispositif d'alimentation en pression hydraulique (1300) sur le premier cylindre de roue (21) et le deuxième cylindre de roue (22), et une première soupape de sortie et une deuxième soupape de sortie qui commandent respectivement un écoulement d'un milieu de pressurisation qui est déchargé depuis les premier et deuxième cylindres de roue (21, 22) ; le second circuit hydraulique (1520) comprend une troisième soupape d'entrée et une quatrième soupape d'entrée pour commander respectivement un écoulement d'un milieu de pressurisation qui est alimenté depuis le dispositif d'alimentation en pression hydraulique (1300) sur le troisième cylindre de roue (23) et le quatrième cylindre de roue (24), et une troisième soupape de sortie et une quatrième soupape de sortie pour commander respectivement un écoulement d'un milieu de pressurisation qui est déchargé depuis les troisième et quatrième cylindres de roue (23, 24) ; le milieu de pressurisation qui est déchargé via les première et deuxième soupapes de sortie est alimenté sur la première voie d'écoulement de sous-réservoir (1710) ; et le milieu de pressurisation qui est déchargé via les troisième et quatrième soupapes de sortie est alimenté sur la deuxième voie d'écoulement de sous-réservoir (1720).

15. Système de frein électronique selon la revendication 3, dans lequel la première ligne de connexion (410) est constituée en tant que tube rigide et la seconde ligne de connexion (420) est constituée en tant que tuyau élastique.
